(19) Europäisches Patentamt
European Patent Office
Office européen des brevets

(11) **EP 2 096 868 A2**

(12) **EUROPEAN PATENT APPLICATION**

(43) Date of publication:
**02.09.2009 Bulletin 2009/36**

(51) Int Cl.:
*H04N 7/26* (2006.01)        *H04N 7/30* (2006.01)
*G06T 9/00* (2006.01)        *H04N 7/50* (2006.01)

(21) Application number: **09160924.8**

(22) Date of filing: **10.03.2006**

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.03.2005 US 660881 P**

(62) Document number(s) of the earlier application(s) in accordance with Art. 76 EPC:
**06737647.5 / 1 875 739**

(71) Applicant: **Qualcomm Incorporated**
**San Diego, CA 92121-1714 (US)**

(72) Inventor: **The designation of the inventor has not yet been filed**

(74) Representative: **Heselberger, Johannes et al**
**Patent- und Rechtsanwälte**
**Bardehle - Pagenberg - Dost**
**Altenburg - Geissler**
**Galileiplatz 1**
**81679 München (DE)**

Remarks:
This application was filed on 22-05-2009 as a divisional application to the application mentioned under INID code 62.

(54) **Context-adaptive bandwidth adjustment in video rate control**

(57)      Methods and apparatus encode video at a targeted bit rate and yet permit variation of a Quantization Parameter (QP) to encode video of varying complexity with relatively consistent visual quality. Constant bit rate (CBR) encoding is desirable in many applications, such as in transmission or broadcasting environments. However, conventional CBR techniques compromise visual quality. Disclosed techniques permit adaptive variation in a QP value and provide the improved visual encoding available in variable bit rate (VBR) schemes while maintaining enough adherence to a targeted bit rate to be applicable to CBR environments.

FIG. 3

## Description

### Claim of Priority under 35 U.S.C. §119

The present Application for Patent claims priority to Provisional Application No. 60/660,881 entitled "METHOD AND APPARATUS FOR CONTEXT-ADAPTIVE BANDWIDTH ADJUSTMENT IN VIDEO RATE CONTROL" filed March 10, 2005, and assigned to the assignee hereof and hereby expressly incorporated by reference herein.

### Reference to Co-Pending Application for Patent

The present Application for Patent is related to the co-pending U.S. Patent Applications entitled "Quasi-Constant-Quality Rate Control with Look Ahead", filed concurrently herewith, assigned to the assignee hereof, and expressly incorporated by reference herein.

## BACKGROUND

### Field

The present invention relates generally to multimedia data, and more specifically to multimedia data compression.

### Background

Due to the explosive growth and great success of the Internet and wireless communication, as well as increasing demand for multimedia services, streaming media over the Internet and mobile/wireless channels has drawn tremendous attention. In heterogeneous Internet Protocol (IP) networks, video is provided by a server and can be streamed by one or more clients. Wired connections include dial-up, integrated services digital network (ISDN), cable, digital subscriber line protocols (collectively referred to as xDSL), fiber, local area networks (LAN), wide area networks (WAN) and others. The transmission mode can be either uni-cast or multi-cast.

Similar to the heterogeneous IP network is mobile/wireless communication. Transport of multimedia content over mobile/wireless channels is very challenging because these channels are often severely impaired due to multi-path fading, shadowing, inter-symbol interference, and noise disturbances. Some other reasons such as mobility and competing traffic also cause bandwidth variations and loss. The channel noise and the number of users being served determine the time-varying property of channel environments.

Digital video is typically compressed for efficient storage and/or transmission. Many standards of video compression exist.

One problem common to video compression is a compromise between bandwidth (bits per second) and visual quality. Various measures, such as peak signal-to-noise ratio (PSNR), can be used to assess visual quality. It will be understood that with a constant frame rate, the bits used for encoding frames of video will be directly proportional to the bit rate or bandwidth for the video, and that these terms (bits and bandwidth), while technically are not the same, are often used interchangeably in the art and the correct interpretation can be determined from context.

The bandwidth needed for relatively good visual quality will vary with the complexity of the video being encoded. For example, a relatively static shot, such as a shot of a newscaster, can be encoded at relatively high visual quality with relatively low bandwidth. By contrast, a relatively dynamic shot, such as a shot panning athletes in a sporting event, can consume a relatively large amount of bandwidth for the same visual quality.

In many transmission or broadcast environments, the bandwidth capability for a particular channel or group of channels is limited. There are various forms of rate control for constant bit rate applications. Existing techniques focus on maintaining the bit rate as close as possible to the targeted bit rate, which can limit the adaptability of the quantization parameter (QP) selected for frames of varying encoding complexity, which can then compromise the visual quality associated with the encoded video.

There is therefore a need in the art for rate control techniques which can maintain a constant bit rate for a transmission medium, and yet provide a degree of variable bit rate capability for relatively good visual quality for the viewer's enjoyment.

## SUMMARY

Embodiments disclosed herein address the above stated needs by providing an adjustment to the targeted bit rate based at least on a history of quantization parameter (QP) values used in encoding frames prior to a frame to be encoded.

One aspect is a method of processing received multimedia data, where the method includes: determining a first quantization parameter (QP) value to be used for encoding; encoding a first portion of the multimedia data with the determined first QP value; determining a temporary bandwidth based on the first QP value; and re-determining the first QP value to be used for encoding a second portion of the multimedia data based at least in part on the temporary bandwidth, said second portion being temporally received after the first portion.

One aspect is an apparatus for processing received multimedia data, where the apparatus includes: means for determining a first quantization parameter (QP) value to be used for encoding; means for encoding a first portion of the multimedia data with the determined first QP value; means for determining a temporary bandwidth based on the first QP value; and means for re-determining the first QP value to be used for encoding a second portion of the multimedia data based at least in part on the temporary bandwidth, said second portion being temporally received after the first portion.

One aspect is an apparatus for processing received multimedia data, where the apparatus includes: an encoder configured to determining a first quantization parameter (QP) value to be used for encoding, where the encoder is further configured to encode a first portion of the multimedia data with the determined first QP value; and a processor configured to determine a temporary bandwidth based on the first QP value; wherein the encoder is configured to re-determine the first QP value to be used for encoding a second portion of the multimedia data based at least in part on the temporary bandwidth, said second portion being temporally received after the first portion.

One aspect is a computer program product embodied in a tangible medium with instructions for processing received multimedia data, where the computer program product includes: a module with instructions for determining a first quantization parameter (QP) value to be used for encoding; a module with instructions for encoding a first portion of the multimedia data with the determined first QP value; a module with instructions for determining a temporary bandwidth based on the first QP value; and a module with instructions for re-determining the first QP value to be used for encoding a second portion of the multimedia data based at least in part on the temporary bandwidth, said second portion being temporally received after the first portion.

One aspect is a method of adjusting a bit rate for a multimedia encoding process, where the method includes: receiving a prior quantization parameter (QP) value that has been used to encode an object; determining a long-term statistic of prior QP values; and determining a modified bit rate for an object to be encoded at least partially based on the prior QP value and the long-term statistic.

One aspect is an apparatus for adjusting a bit rate for a multimedia encoding process, where the apparatus includes: means for determining a long-term statistic of prior quantization parameter (QP) values; and means for determining a modified bit rate for an object to be encoded at least partially based on a prior QP value and the long-term statistic, where the prior QP value has been used to encode an object.

One aspect is an apparatus for adjusting a bit rate for a multimedia encoding process, where the apparatus includes: a statistic generator configured to determine a long-term statistic of prior QP values; an adjustment circuit configured to receive a prior quantization parameter (QP) value that has been used to encode an object, where the adjustment circuit is further configured to determine a modified bit rate for an object to be encoded at least partially based on the prior QP value and the long-term statistic.

One aspect is a computer program product embodied in a tangible medium with instructions for adjusting a bit rate for a multimedia encoding process, where the computer program product includes: a module with instructions for receiving a prior quantization parameter (QP) value that has been used to encode an object; a module with instructions for determining a long-term statistic of prior QP values; and a module with instructions for determining a modified bit rate for an object to be encoded at least partially based on the prior QP value and the long-term statistic.

One aspect is a method of video encoding a video channel, where the method includes: receiving a targeted bit rate for video encoding of a plurality of video frames of the video channel, wherein the plurality of video frames are for a first time interval; encoding a first frame of the video channel, wherein the first frame is encoded with a first quantization parameter (QP) value and with a temporary bit allocation; updating a moving average of quantization parameter with the first quantization parameter (QP) value; computing a bit allocation for a second frame immediately subsequent to the first frame for the video channel, where the computation for the bit allocation for the second frame is adaptively adjustable based at least on the first quantization parameter (QP) and the moving average; and encoding the second frame using the computed bit allocation.

## BRIEF DESCRIPTION OF THE DRAWINGS

FIG. 1 illustrates a graph of a "pure" constant bit rate (CBR) system with time along a horizontal axis and bit rate along a vertical axis;

FIG. 2 illustrates a graph of a piecewise CBR system with time along a horizontal axis and bit rate along a vertical axis;

FIG. 3 is a system diagram illustrating an example of a processor for generating a modified bit rate;

FIG. 4 is a flowchart generally illustrating a process of modifying a targeted bit rate for encoding; and

FIG. 5 is a flowchart generally illustrating a process of modifying a targeted bit rate for encoding.

FIG. 6 is a flowchart generally illustrating a method of processing received multimedia data.

FIG. 7 is a system diagram illustrating an example of an apparatus for processing received multimedia data.

FIG. 8 is a system diagram illustrating an example of an apparatus for adjusting a bit rate for a multimedia encoding process.

## DETAILED DESCRIPTION

Methods and apparatus encode multimedia at a targeted bit rate and yet permit variation of a quantization parameter (QP) to encode video of varying complexity with relatively consistent visual quality. Multimedia data can include visual data, audio data, or a combination of both visual data and audio data. This permits the QP to be varied for relatively good visual quality while maintaining targeted bit rates for applicability within many constant bit rate (CBR) environments, such as within transmission or broadcasting environments.

Conventional techniques for bit rate control sacrifice visual quality for bit rate control. For example, Chapter 10 of Test Model 5 (TM5) from the MPEG organization <http://www.mpeg.org/MSSG/tm5/Ch10/Ch10.htm1> describes control of QP in a strict manner to maintain buffer occupancy levels for tight bit rate control. While this permits the resulting data to be provided over CBR mediums, visual quality is impaired.

In typical systems, data buffers temporarily store incoming data. For relatively short periods of time, a data buffer permits a system to use data at a different rate from which it is provided. This permits some variation in bit rate to be tolerated within CBR systems as well as permits some robustness for variations in the transmission medium. Such transmission mediums can include, for example, satellite television, such as DirecTV®, digital cable networks, wide area networks, the Internet, wireless networks, optical networks cell phone networks, and the like. In the case of wireless communication systems, the transmission medium can comprise, for example, part of a code division multiple access (CDMA or CDMA2000) communication system or alternately, the system can be a frequency division multiple access (FDMA) system, an orthogonal frequency division multiple access (OFDMA) system, a time division multiple access (TDMA) system such as GSM/GPRS (General Packet Radio Service)/EDGE (enhanced data GSM environment) or TETRA (Terrestrial Tracked Radio) mobile telephone technology for the service industry, a wideband code division multiple access (WCDMA), a high data rate (1xEV-DO or 1xEV-DO Gold Multicast) system, or in general any wireless communication system employing a combination of techniques. Disclosed techniques take advantage of the variation in bit rate permissible by a data buffer and adjust the bit rate within the context of a CBR system to provide relatively good visual quality.

In a CBR system, the target bit rate is constant over a relatively long period of time. These time intervals can be as long as infinite for some systems, and can be much shorter, such as one-second in duration for systems that are constant bit rate over piecewise intervals. For example, in a system where separate video streams or channels are multiplexed together over periodic intervals, such as over one second intervals, the individual channels can have a targeted bit rate that is constant over these period intervals.

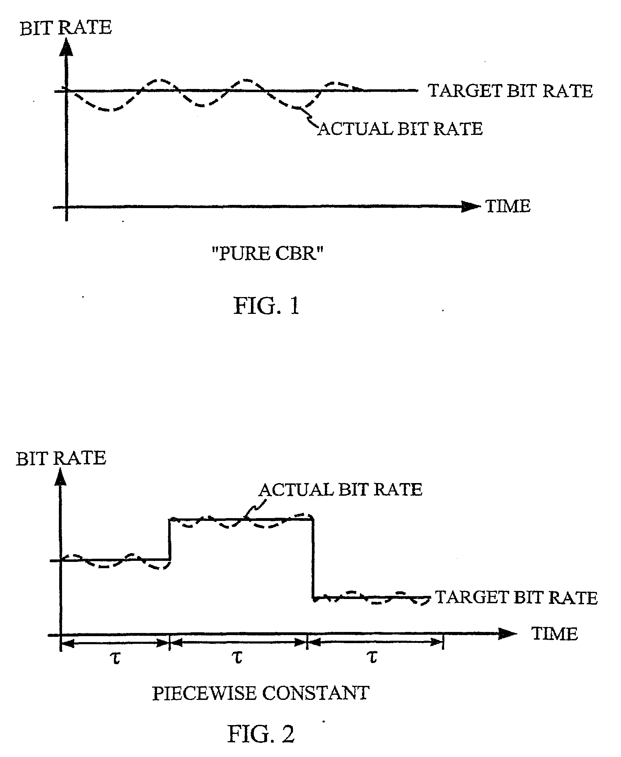

Figure 1 illustrates a graph of a "pure" constant bit rate (CBR) system with time along a horizontal axis and bit rate along a vertical axis. Figure 2 illustrates a graph of a piecewise CBR system with time along a horizontal axis and bit rate along a vertical axis. Targeted bit rates and examples of actual bit rates are illustrated in each graph.

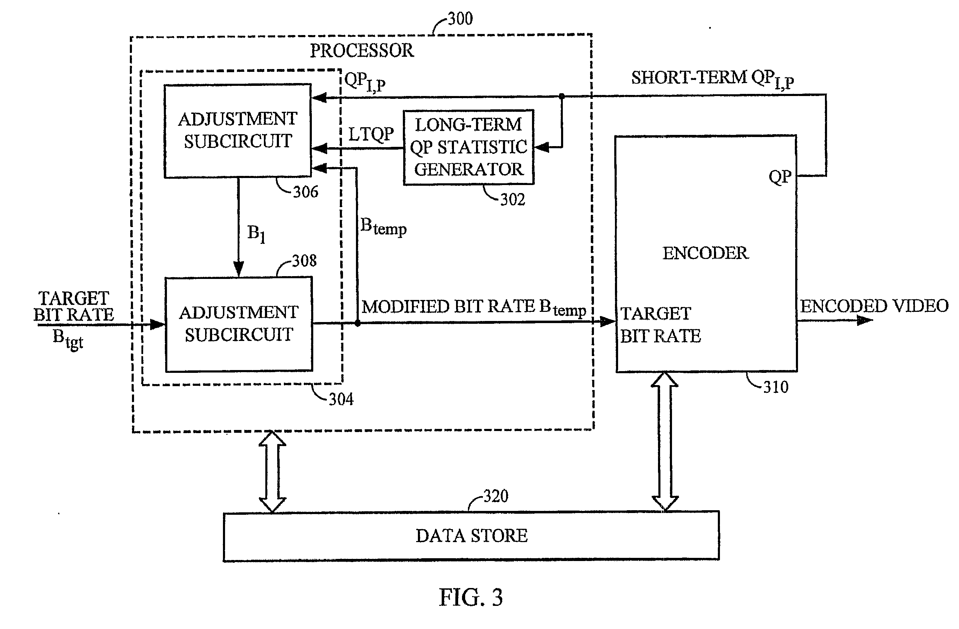

Figure 3 is a system diagram illustrating an example of a processor 300 for generating a modified bit rate. For example, the processor 300 can be a specialized circuit or can be implemented by software or firmware executed on a processor, such as a general purpose processor or a digital signal processor. The illustrated processor 300 includes a long-term quantization parameter (QP) statistic generator 302 and an adjustment circuit 304. The adjustment circuit 304 includes a first adjustment subcircuit 306 and a second adjustment subcircuit 308. The processor 300 can be used in a standalone system, as a circuit within an encoder, or even embodied as plug-in in software executed in a microprocessor or the like. For example, the processor 300 can be embodied in a video codec and/or an audio codec.

As an input, the processor 300 receives a target bit rate $B_{tgt}$ from a control source, such as a multiplexer. For example, the target bit rate $B_{tgt}$ can correspond to the target bit rate $B_{tgt}$ for a constant bit rate (CBR) system as shown in Figure 1 or a selected bit rate for a piecewise CBR system as shown in Figure 2.

As another input, the processor 300 receives a short-term quantization parameter $QP_{I,P}$ from an encoder 310. One or both of the processor 300 and the encoder 310 can be in communication with a data store 320, for storage and retrieval of data, such as program data, variables, unencoded multimedia data, encoded multimedia data, or the like. The encoder can correspond to a wide variety of encoders, such as, but not limited to, an MPEG-2 encoder using test model 5 (TM5) for rate control. The short-term quantization parameter $QP_{I,P}$ can be the value of the quantization parameter (QP) used for a frame that has been encoded immediately prior to the frame that is to be encoded by the encoder 310. Other relatively short term statistics can also be used.

As an output, the processor 300 generates a modified bit rate $B_{temp}$ that the encoder 310 uses as a target bit rate control. The processor 300 modifies the target bit rate control $B_{tgt}$ that would ordinarily be applied to the input of the encoder 310, and provides the modified bit rate $B_{temp}$ as the target bit rate control instead. This provides the encoder with an adaptive bit rate control which is sufficiently constant for CBR systems, and yet sufficiently adaptable in response to changing visual complexities such that a visual quality of the encoding is relatively constant. For example, while an overall bit rate used to encode multimedia can approach the targeted bit rate of a constant bit rate (CBR), such as the "pure" CBR environment shown in Figure 1 or the piecewise constant bit rate environment shown in Figure 2, the targeted bit rate is adjustable to permit quasi-constant quality encoding performance.

The long-term quantization parameter (QP) statistic generator 302 generates a long-term statistic based on the history of short-term QP values $QP_{I,P}$, such as the most recent QP values used by the encoder 310. One or more of various long-term statistics can be generated. For example, an exponentially-weighted moving average (EWMA) can be used. Equation 1, below, represents an assignment statement for such an EWMA.

$$LTQP \leftarrow \alpha \times QP_{I,P} + (1 - \alpha) \times LTQP \qquad \textbf{(Eq. 1)}$$

In Equation 1, $LTQP$ indicates the long-term exponentially-weighted moving average, $\alpha$ indicates a smoothing constant, and $QP_{I,P}$ indicates a short-term QP value, such as the most recently used QP value used by the encoder 310. The $LTQP$ to the left of the arrow indicates the value being computed. The $LTQP$ to the right of the arrow indicates a value from the previous computation of $LTQP$. One advantage of the EWMA technique is that a history of a large amount of prior QP values is not needed for the computation. A variety of techniques can be used for the initial value of the exponentially-weighted moving average $LTQP$. For example, a prior value can be used as a starting point, a simple moving average can be used, a default value, such as an expected value for the $LTQP$ can be used, and the like. An example of an appropriate value for the smoothing constant $\alpha$ is 0.3 for a system operating at 50 frames per second. Other appropriate values will be readily determined by one of ordinary skill in the art.

Other techniques can also apply for generating the long-term statistic. A simple moving average can also be used. An unequally-weighted moving average can also be used. A median value can also be used. Combinations of the foregoing can also be used. Other techniques will be readily determined by one of ordinary skill in the art.

The short-term statistic $QP_{I,P}$ and the long term statistic $LTQP$ are provided as inputs to the first adjustment subcircuit 306. These values are used to weigh a modified bit rate $B_{temp}$ based on the short term and long-term QP values, to generate an adjusted bit rate $B_1$. For example, the first adjustment subcircuit 306 can perform the calculation expressed in Equation 2.

$$B_1 \leftarrow B_{temp} \times 2^{\frac{QP_{I,P} - LTQP}{A}} \qquad \textbf{(Eq. 2)}$$

An exponential adjustment is illustrated in Equation 2. An exponential adjustment provides relatively larger changes in the adjusted bit rate $B_1$ for relatively larger differences in QP values between the short-term statistic and the long-term statistic. However, other adjustments that are not exponential can be used, including, but not limited to, other non-linear adjustments or even linear adjustments. In addition, rather than compute a formula, lookup tables or the like can be used to retrieve adjustment factors.

Returning now to Equation 2, as an initial condition prior to encoding or prior to operation of the first adjustment subcircuit 306, the value of the modified bit rate $B_{temp}$ can be initialized to the value of the target bit rate $B_{tgt}$. The short-term statistic $QP_{I,P}$ and the long-term statistic $LTQP$ can be initialized to default values, such as to expected values. The value of variable $A$ can vary in a very broad range depending on how much deviation is desired. In one example, a value of 40 was determined to be effective for A. Other appropriate values will be readily determined by one of ordinary skill in the art.

The adjusted bit rate $B_1$ is provided as an input to the second adjustment subcircuit 308. For example, the second adjustment subcircuit 308 can compute a value for the modified bit rate $B_{temp}$ according to Equation 3.

$$B_{temp} \leftarrow B_1 \times 2^{\gamma \frac{B_{tgt} - B_1}{B_{tgt}}} \qquad \textbf{(Eq. 3)}$$

An exponential adjustment is illustrated in Equation 3. An exponential adjustment provides relatively larger changes for the modified bit rate $B_{temp}$ for relatively larger deviations between the adjusted bit rate $B_1$ and the target bit rate $B_{tgt}$. However, other adjustments that are not exponential can be used, including, but not limited to, other non-linear adjustments or even linear adjustments. In addition, rather than compute a formula, lookup tables and the like can be used to retrieve adjustment factors for the modified bit rate. In addition, prior to providing the modified bit rate $B_{temp}$ to the encoder 310, the modified bit rate $B_{temp}$ can be bounded by, for example, system limits for minimum and maximum encoding rate values. The value of $\gamma$ affects the dampening associated with the exponential adjustment. The value of $\gamma$ can vary in a broad range and in one example, a value of 1/48 for $\gamma$ was found to be effective. Other applicable values for $\gamma$ will be readily determined by one of ordinary skill in the art and may depend on system constraints, such as buffer sizes. In addition, where system buffers are relatively large, smaller values for $A$ and for $\gamma$ can be used, which allows greater deviation from the target bit rate $B_{tgt}$.

The resulting modified bit rate $B_{temp}$ is provided as an input to the encoder 310, which encodes video frames using the modified bit rate $B_{temp}$ as the target bit rate. In one example, the encoder 310 can follow Chapter 10 of Test Model 5 (TM5) from the MPEG organization <http://www.mpeg.org/MSSG/tm5/Ch10/Ch10.htm1> to compute a quantization parameter (QP) to use for encoding a frame given the modified bit rate $B_{temp}$. It should also be noted that the QP used by the encoder 310 can also be varied within the encoder 310 by, for example, limiting a size of change relative to a prior value used, virtual buffer occupancy levels, and the like.

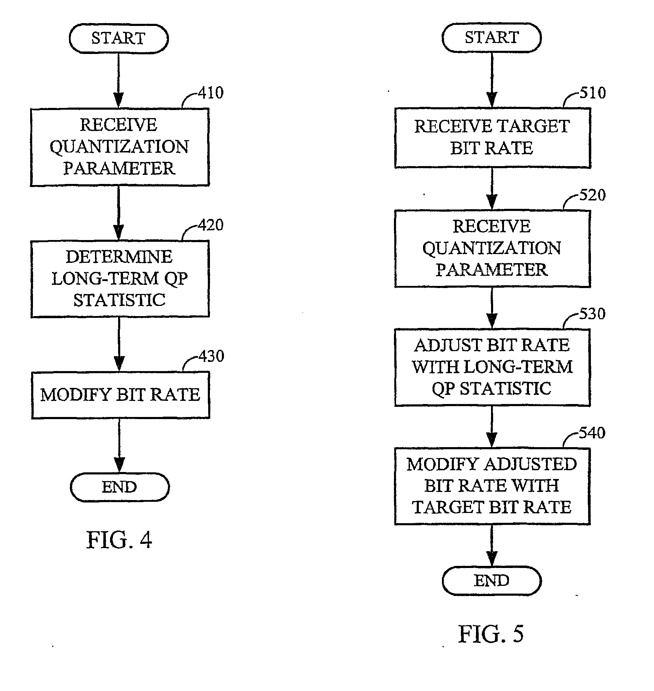

Figure 4 is a flowchart generally illustrating a process of modifying a targeted bit rate for encoding. It will be appreciated by the skilled practitioner that the illustrated process can be modified in a variety of ways. For example, in another embodiment, various portions of the illustrated process can be combined, can be rearranged in an alternate sequence, can be removed, and the like.

The illustrated process receives, at state 410, a quantization parameter QP from an encoder, such as the encoder 310. For example, the QP value of the most recently encoded frame can be used as a short-term statistic $QP_{I,P}$ of the QP values.

The process advances to determine, at state 420, a long-term statistic $LTQP$ from prior QP values. For example, an exponentially-weighted moving average can be computed as described earlier in connection with Equation 1. As described earlier in connection with Figure 3, other types of computations can be used to generate the long-term statistic $LTQP$.

At state 430 a target bit rate is modified at least partially based on a value associated with the long-term statistic $LTQP$. For example, the modified bit rate can be generated by application of Equations 2 and 3, which were described earlier in connection with Figure 3. A processor means, such as processor 300 of Figure 3 performs the determining and modifying acts of states 420 and 430. An encoder means, such as the encoder 310 illustrated in Figure 3, can then use the modified bit rate for improved video encoding in a quasi-constant bit rate manner.

Figure 5 is a flowchart generally illustrating a process of modifying a targeted bit rate for encoding. It will be appreciated by the skilled practitioner that the illustrated process can be modified in a variety of ways without departing from the spirit and scope of the invention. For example, in another embodiment, various portions of the illustrated process can be combined, can be rearranged in an alternate sequence, can be removed, and the like.

The illustrated process receives, at state 510, a target bit rate $B_{tgt}$ from, for example, a system controller of bit rates such as a multiplexer for multiple video streams. The target bit rate $B_{tgt}$ can be a constant value as is typical of constant bit rate (CBR) systems or can be a changing value as can be encountered in piecewise-constant CBR systems.

The process advances to receive, at state 520, a value for a quantization parameter QP from an encoder, such as the encoder 310. This value can be used as a short-term QP value $QP_{I,P}$.

At 530, a bit rate is adjusted for encoding using an adjustment based on the long-term QP statistic. An example of such an adjustment is the exponential adjustment described earlier in connection with Equation 2. In Figure 3, the corresponding modified bit rate was described in connection with the adjusted bit rate $B_1$.

At 540, the adjusted bit rate $B_1$ is further modified to a modified bit rate $B_{temp}$ based on the target bit rate $B_{tgt}$. This steers an adjustment or modification of the bit rate back to the desired target bit rate $B_{tgt}$ for constant bit rate (CBR) performance over sufficiently wide intervals. An example of such a modification was described earlier in connection with Equation 3. In one optional aspect, one or both of the adjusted bit rate $B_1$ or the modified bit rate $B_{temp}$ is adjusted based on the context of the multimedia date that is to be encoded. For example, the context can be the encoding complexity, such as, for example, visual complexity.

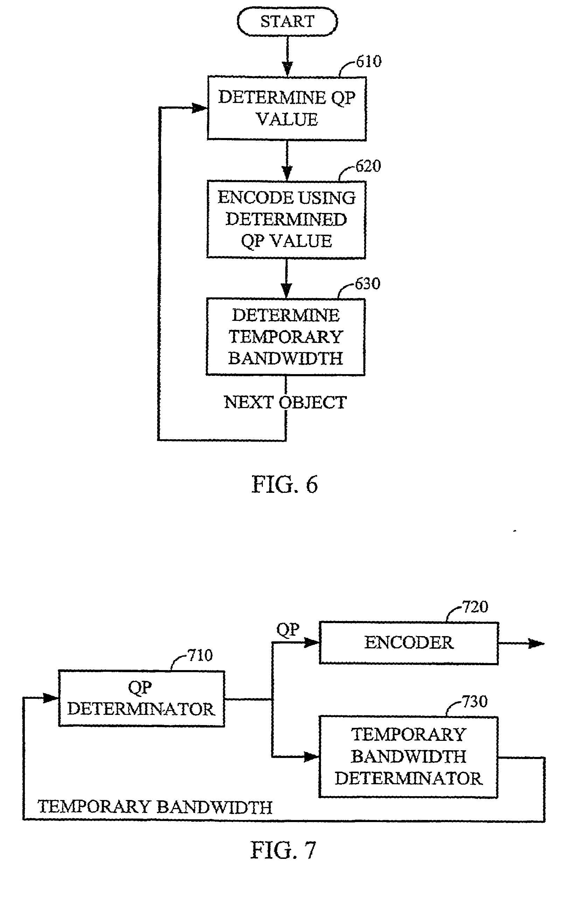

Figure 6 is a flowchart generally illustrating a method of processing received multimedia data. It will be appreciated by the skilled practitioner that the illustrated method can be modified in a variety of ways. For example, in another embodiment, various portions of the illustrated method can be combined, can be rearranged in an alternate sequence, can be removed, and the like.

The method begins by determining 610 a QP value to be used for encoding an object, such as a frame or a macroblock. Initially, a bandwidth selected for encoding can be provided by, for example, a multiplexer. The method can then proceed to encode 620 the object using the determined QP value. The method can then determine 630 a temporary bandwidth to use for a subsequent encoding. This temporary bandwidth can be based at least in part on the determined QP value, prior QP values, and the like. The process can return to determine 610 a new QP value to be used for encoding of a subsequent object and can repeat as desired for additional objects.

Figure 7 is a system diagram illustrating an example of an apparatus for processing received multimedia data. It will be appreciated by the skilled practitioner that the illustrated apparatus can be modified in a variety of ways. For example, the components can be separate, can be combined, can be implemented by firmware executed by a general purpose processor or digital signal processor, or the like. The apparatus includes a QP determinator 710, an encoder 720, and a temporary bandwidth determinator 730.

The QP deteminator 710 determines a QP value to be used for encoding and provides the QP value to the encoder 720 for encoding and to the temporary bandwidth determinator 730 for determination of a temporary bandwidth based at least on the QP value. The temporary bandwidth is then provided by the temporary bandwidth determinator 730 to the QP determinator 710 and used to generate a subsequent QP value.

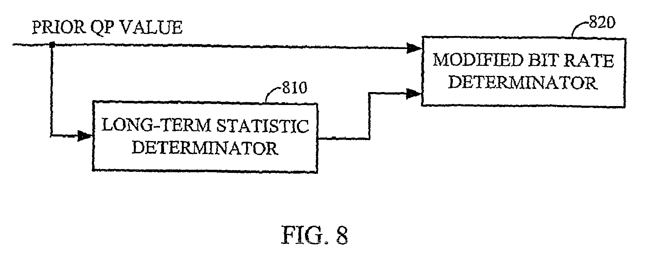

Figure 8 is a system diagram illustrating an example of an apparatus for adjusting a bit rate for a multimedia encoding process. It will be appreciated by the skilled practitioner that the illustrated apparatus can be modified in a variety of ways. For example, the components can be separate, can be combined, can be implemented by firmware executed by a general purpose processor or digital signal processor, or the like. The apparatus includes a long-term statistic determinator 810, and a modified bit rate determinator 820.

The long-term statistic determinator 810 receives a prior QP value that has been used by an encoder for the encoding of an object, such as a macroblock or a frame. For example, the long-term statistic determinator can compute an exponentially-weighted moving average of the prior QP values. The prior QP value and a statistic, such as a weighted average from the long-term statistic determinator, are provided to the modified bit rate determinator 820, which determines a modified bit rate to be used in the encoding of a subsequent object. For example, the bit rate can be modified from a provided bit rate to permit enough variation in bit rate to permit quasi-constant quality encoding performance, and yet maintain control of encoding close to a targeted bit rate such that the encoded multimedia data are compatible with constant bit rate systems.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of ordinary skill would further appreciate that the various illustrative logical blocks, modules, and algorithm steps described in connection with the examples disclosed herein may be implemented as electronic hardware, firmware, computer software, middleware, microcode, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosed methods.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An example storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable a person skilled in the art to make or use the present invention. Various modifications to these embodiments will be readily apparent to those skilled in the art, and the generic principles defined herein may be applied to other examples and additional elements may be added. For example, one or a combination of the elements of the processor 300 may be combine and/or rearranged without affecting the operations of the processor. One or a combination of the processor 300, the encoder 310 and the data store 320 may also be combined and/or rearranged in some embodiments. Similarly, one or a combination of the QP determinator 710, an encoder 720 and a temporary bandwidth determinator 730 may be combined and/or rearranged. The long-term statistic determinator 810 and modified bit rate determinator 820 may be combined or rearranged.

Thus, the present invention is not intended to be limited to the embodiments shown herein but is to be accorded the widest scope consistent with the principles and novel features disclosed herein.

In the following, further embodiments are described to facilitate understanding:

1. A method of processing received multimedia data comprising:

determining a first quantization parameter (QP) value to be used for encoding;
encoding a first portion of the multimedia data with the determined first QP value;
determining a temporary bandwidth based on the first QP value; and
re-determining the first QP value to be used for encoding a second portion of the multimedia data based at least in part on the temporary bandwidth, said second portion being temporally received after the first portion.

2. The method of number 1 further comprising:

determining a second value based on the previously used first QP value and at least one other previously used first QP value.

3. The method of number 2, wherein re-determining the temporary bandwidth comprises:

determining the temporary bandwidth based at least partially on the first QP value and the second value.

4. The method of number 2, wherein re-determining further comprises re-determining the temporary bandwidth based at least partially on the QP value, the second value, and a target bandwidth.

5. The method of number 2 further comprising:

increasing the temporary bandwidth if the first QP value is higher than the second value; and
decreasing the temporary bandwidth if the first QP value is lower than the second value.

6. The method of number 1, wherein the first and second portion of multimedia data respectively correspond to first and second video frames.

7. The method of number 1 further comprising receiving an at least piecewise constant target bandwidth, and modifying the temporary bandwidth based at least partially on a complexity of the multimedia data to be encoded.

8. The method of number 1, further comprising determining the temporary bandwidth at least partially based on a context of the multimedia data to be encoded.

9. The method of number 8, wherein the context comprises complexity.

10. An apparatus for processing received multimedia data, the apparatus comprising:

means for determining a first quantization parameter (QP) value to be used for encoding;
means for encoding a first portion of the multimedia data with the determined first QP value;
means for determining a temporary bandwidth based on the first QP value; and
means for re-determining the first QP value to be used for encoding a second portion of the multimedia data based at least in part on the temporary bandwidth, said second portion being temporally received after the first portion.

11. The apparatus of number 10, further comprising means for determining a second value based on the previously used first QP value and at least one other previously used first QP value.

12. The apparatus of number 11, wherein the re-determining means is further configured to determine the temporary bandwidth based at least partially on the first QP value and the second value.

13. The apparatus of number 11, wherein the re-determining means is further configured to determine the temporary bandwidth based at least partially on the QP value, the second value, and a target bandwidth.

14. The apparatus of number 11, further comprising:

means for increasing the temporary bandwidth if the first QP value is higher than the second value; and
means for decreasing the temporary bandwidth if the first QP value is lower than the second value.

15. The apparatus of number 10, wherein the first and second portion of multimedia data respectively correspond to first and second video frames.

16. An apparatus for processing received multimedia data, the apparatus comprising:

an encoder configured to determining a first quantization parameter (QP) value to be used for encoding, where the encoder is further configured to encode a first portion of the multimedia data with the determined first QP value; and
a processor configured to determine a temporary bandwidth based on the first QP value;

wherein the encoder is configured to re-determine the first QP value to be used for encoding a second portion of the multimedia data based at least in part on the temporary bandwidth, said second portion being temporally received after the first portion.

17. The apparatus of number 16, wherein the processor is further configured to determine a second value based on the previously used first QP value and at least one other previously used first QP value.

18. The apparatus of number 17, wherein the processor is further configured to determine the temporary bandwidth based at least partially on the first QP value and the second value.

19. The apparatus of number 17, wherein the processor is further configured to determine the temporary bandwidth based at least partially on the QP value, the second value, and a target bandwidth.

20. The apparatus of number 17, wherein the processor is further configured to:

increase the temporary bandwidth if the first QP value is higher than the second value; and
decrease the temporary bandwidth if the first QP value is lower than the second value.

21. The apparatus of number 16, wherein the first and second portion of multimedia data respectively correspond to first and second video frames.

22. The apparatus of number 16, further comprising receiving a target bandwidth from a multiplexer.

23. A computer program product embodied in a tangible medium with instructions for processing received multimedia data, the computer program product comprising:

a module with instructions for determining a first quantization parameter (QP) value to be used for encoding;
a module with instructions for encoding a first portion of the multimedia data with the determined first QP value;
a module with instructions for determining a temporary bandwidth based on the first QP value; and
a module with instructions for re-determining the first QP value to be used for encoding a second portion of the multimedia data based at least in part on the temporary bandwidth, said second portion being temporally received after the first portion.

24. The computer program product of number 23, further comprising:

a module with instructions for determining a second value based on the previously used first QP value and at least one other previously used first QP value.

25. The computer program product of number 24, wherein the module with instructions for re-determining the temporary bandwidth further comprises:

a module with instructions for determining the temporary bandwidth based at least partially on the first QP value and the second value.

26. The computer program product of number 24, wherein the module with instructions for re-determining further comprises a module with instructions for re-determining the temporary bandwidth based at least partially on the QP value, the second value, and a target bandwidth.

27. The computer program product of number 24, further comprising:

a module with instructions for increasing the temporary bandwidth if the first QP value is higher than the second value; and
a module with instructions for decreasing the temporary bandwidth if the first QP value is lower than the second value.

28. The computer program product of number 23, wherein the first and second portion of multimedia data respectively correspond to first and second video frames.

29. A method of adjusting a bit rate for a multimedia encoding process, the method comprising:

receiving a prior quantization parameter (QP) value that has been used to encode an object;
determining a long-term statistic of prior QP values; and
determining a modified bit rate for an object to be encoded at least partially based on the prior QP value and the long-term statistic.

30. The method of number 29, further comprising exponentially adjusting the modified bit rate using the prior QP value and the long-term statistic.

31. The method of number 29, further comprising using a targeted bit rate to adjust the modified bit rate.

32. The method of number 29, further comprising computing an exponentially-weighted moving average for the long-term statistic.

33. The method of number 29, further comprising providing the modified bit rate to an encoder as a target bit rate for an object to be encoded.

34. The method of number 29, further comprising determining the temporary bandwidth at least partially based on a context of the multimedia data to be encoded.

35. The method of number 34, wherein the context comprises complexity.

36. An apparatus for adjusting a bit rate for a multimedia encoding process, the apparatus comprising:

means for determining a long-term statistic of prior quantization parameter (QP) values; and
means for determining a modified bit rate for an object to be encoded at least partially based on a prior QP value and the long-term statistic, where the prior QP value has been used to encode an object.

37. The apparatus of number 36, wherein the determining means for the modified bit rate is configured to exponentially adjust the modified bit rate using the prior QP value and the long-term statistic.

38. The apparatus of number 36, further comprising means for using a targeted bit rate to adjust the modified bit rate.

39. The apparatus of number 36, wherein the determining means for the long-term statistic is configured to compute an exponentially-weighted moving average for the long-term statistic.

40. The apparatus of number 36, further comprising means for providing the modified bit rate to an encoder as a target bit rate for an object to be encoded.

41. An apparatus for adjusting a bit rate for a multimedia encoding process, the apparatus comprising:

a statistic generator configured to determine a long-term statistic of prior QP values;
an adjustment circuit configured to receive a prior quantization parameter (QP) value that has been used to encode an object, where the adjustment circuit is further configured to determine a modified bit rate for an object to be encoded at least partially based on the prior QP value and the long-term statistic.

42. The apparatus of number 41, wherein the adjustment circuit is configured to exponentially adjust the modified bit rate using the prior QP value and the long-term statistic.

43. The apparatus of number 41, wherein the adjustment circuit is further configured to adjust the modified bit rate in view of a target bit rate.

44. The apparatus of number 41, statistic generator is further configured to compute an exponentially-weighted moving average for the long-term statistic.

45. The apparatus of number 41, further comprising a multiplexer configured to provide a target bit rate to the adjustment circuit.

46. A computer program product embodied in a tangible medium with instructions for adjusting a bit rate for a multimedia encoding process, the computer program product comprising:

a module with instructions for receiving a prior quantization parameter (QP) value that has been used to encode an object;
a module with instructions for determining a long-term statistic of prior QP values; and
a module with instructions for determining a modified bit rate for an object to be encoded at least partially based on the prior QP value and the long-term statistic.

47. The computer program product of number 46, further comprising a module with instructions for exponentially adjusting the modified bit rate using the prior QP value and the long-term statistic.

48. The computer program product of number 46, further comprising a module with instructions for using a targeted bit rate to adjust the modified bit rate.

49. The computer program product of number 46, further comprising a module with instructions for computing an exponentially-weighted moving average for the long-term statistic.

50. The computer program product of number 46, further comprising a module with instructions for providing the modified bit rate to an encoder as a target bit rate for an object to be encoded.

**Claims**

1. A method of adjusting a bit rate for a multimedia encoding process, the method comprising:

   receiving a prior quantization parameter (QP) value that has been used to encode an object;
   determining a long-term statistic of prior QP values; and
   determining a modified bit rate for an object to be encoded at least partially based on the prior QP value and the long-term statistic.

2. The method of Claim 1, further comprising exponentially adjusting the modified bit rate using the prior QP value and the long-term statistic.

3. The method of Claim 1, further comprising using a targeted bit rate to adjust the modified bit rate.

4. The method of Claim 1, further comprising computing an exponentially-weighted moving average for the long-term statistic.

5. The method of Claim 1, further comprising providing the modified bit rate to an encoder as a target bit rate for an object to be encoded.

6. The method of claim 1, further comprising determining the temporary bandwidth at least partially based on a context of the multimedia data to be encoded.

7. The method of claim 6, wherein the context comprises complexity.

8. An apparatus for adjusting a bit rate for a multimedia encoding process, the apparatus comprising:

    means for determining a long-term statistic of prior quantization parameter (QP) values; and
    means for determining a modified bit rate for an object to be encoded at least partially based on a prior QP value and the long-term statistic, where the prior QP value has been used to encode an object.

9. The apparatus of Claim 8, wherein the determining means for the modified bit rate is configured to exponentially adjust the modified bit rate using the prior QP value and the long-term statistic.

10. The apparatus of Claim 8, further comprising means for using a targeted bit rate to adjust the modified bit rate.

11. The apparatus of Claim 8, wherein the determining means for the long-term statistic is configured to compute an exponentially-weighted moving average for the long-term statistic.

12. The apparatus of Claim 8, further comprising means for providing the modified bit rate to an encoder as a target bit rate for an object to be encoded.

13. An apparatus for adjusting a bit rate for a multimedia encoding process, the apparatus comprising:

    a statistic generator configured to determine a long-term statistic of prior QP values;
    an adjustment circuit configured to receive a prior quantization parameter (QP) value that has been used to encode an object, where the adjustment circuit is further configured to determine a modified bit rate for an object to be encoded at least partially based on the prior QP value and the long-term statistic.

14. The apparatus of Claim 13, further comprising a multiplexer configured to provide a target bit rate to the adjustment circuit.

15. A computer program product embodied in a tangible medium with instructions for adjusting a bit rate for a multimedia encoding process, the computer program product comprising:

    a module with instructions for receiving a prior quantization parameter (QP) value that has been used to encode an object;
    a module with instructions for determining a long-term statistic of prior QP values; and
    a module with instructions for determining a modified bit rate for an object to be encoded at least partially based on the prior QP value and the long-term statistic.

BIT RATE

TARGET BIT RATE

ACTUAL BIT RATE

TIME

"PURE CBR"

FIG. 1

BIT RATE

ACTUAL BIT RATE

TARGET BIT RATE

TIME

$\tau$          $\tau$          $\tau$

PIECEWISE CONSTANT

FIG. 2

SHORT-TERM $QP_{I,P}$

ENCODED VIDEO

ENCODER

QP

310

TARGET
BIT RATE

PROCESSOR

300

$QP_{I,P}$

LONG-TERM
QP STATISTIC
GENERATOR

302

LTQP

$B_{temp}$

MODIFIED BIT RATE $B_{temp}$

ADJUSTMENT
SUBCIRCUIT

306

$B_1$

ADJUSTMENT
SUBCIRCUIT

308

304

DATA STORE

320

TARGET
BIT RATE
$B_{tgt}$

FIG. 3

START

RECEIVE
QUANTIZATION
PARAMETER
410

DETERMINE
LONG-TERM QP
STATISTIC
420

MODIFY BIT RATE
430

END

FIG. 4

START

RECEIVE TARGET
BIT RATE
510

RECEIVE
QUANTIZATION
PARAMETER
520

ADJUST BIT RATE
WITH LONG-TERM
QP STATISTIC
530

MODIFY ADJUSTED
BIT RATE WITH
TARGET BIT RATE
540

END

FIG. 5

START

DETERMINE QP
VALUE 610

ENCODE USING
DETERMINED
QP VALUE 620

DETERMINE
TEMPORARY
BANDWIDTH 630

NEXT OBJECT

FIG. 6

QP
DETERMINATOR 710

QP

ENCODER 720

TEMPORARY
BANDWIDTH
DETERMINATOR 730

TEMPORARY BANDWIDTH

FIG. 7

PRIOR QP VALUE

MODIFIED BIT RATE
DETERMINATOR

LONG-TERM STATISTIC
DETERMINATOR

FIG. 8

**EP 2 096 868 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60660881 B